# FASCICULE DE BREVET EUROPEEN

(11) **EP 0 778 075 B1**
(45) Date de publication et mention de la délivrance du brevet: **08.10.2003**
(21) Numéro de dépôt: 96402362.6
(22) Date de dépôt: 06.11.1996
(51) Int. Cl.: B01D 71/02, B01D 71/04, B01J 37/02, C03C 23/00

(54) **Procédé de l'élaboration de membranes de zéolithe supportées par du verre poreux**
Verfahren zur Herstellung von durch poröses Glas gestützten Zeolithmembranen
Process for the preparation of porous glass supported zeolite membranes

(30) Priorité: 08.12.1995 FR 9514564
(43) Date de publication de la demande: 11.06.1997
(73) Titulaire: Institut Français du Pétrole, 92502 Rueil-Malmaison (FR)
(72) Inventeur: Anstett, Martine, 92500 Rueil Malmaison (FR); Le Dred, Ronan, 68400 Riedsheim (FR); Guth, Jean-Louis, 68200 Mulhouse (FR); Streicher, Christian, 92500 Rueil Malmaison (FR); Methivier, Alain, 92500 Rueil Malmaison (FR)

(56) Documents cités:
- EP-A- 0 180 200
- EP-A- 0 183 183
- EP-A- 0 481 659
- WO-A-93/17781
- WO-A-93/19840

## Description

L'invention concerne un procédé d'élaboration de membranes de zéolithe supportée par du verre poreux.

Les zéolithes sont utilisées pour leurs propriétés de séparation par adsorption sélective ou leur propriétés catalytiques. Cependant, la séparation sur une zéolithe en poudre est un procédé discontinu. Une membrane de zéolithe offre la possibilité de séparer des molécules par un procédé continu économiquement intéressant.

Divers procédés d'élaboration de membranes de zéolithe ont déjà été décrits. Ces membranes sont souvent préparées par cristallisation d'un film de zéolithe sur et/ou dans un support poreux ou sur un support non poreux. Deux cas sont possibles.

Dans le premier cas, le support est immergé dans un gel précurseur de zéolithe et l'ensemble est soumis à des conditions hydrothermales afin de cristalliser la zéolithe. La demande de brevet JP-A-60/129119, par exemple, décrit une membrane composée d'un film de zéolithe cristallisé sur la surface d'un support en alumine. Dans le brevet US-A-5100596, une membrane est obtenue par cristallisation d'un tamis moléculaire sur une surface non poreuse et séparation du film de cette surface. Dans la demande de brevet EP-A-481660, concernant une membrane de zéolithe supportée, la couche de zéolithe est liée directement au support. Avant la cristallisation de la zéolithe, le support est mis au contact d'une solution ou d'une suspension contenant une source d'acide silicique pour conduire à la formation d'oligomères d'acide silicique sur la surface. La demande de brevet JP-A-06/321530 décrit un procédé d'élaboration de membranes composites dans lequel la température de synthèse est augmentée pendant la cristallisation.

Dans le deuxième cas, le support est mis au contact d'une solution colloïdale, séparé de celle-ci et placé dans de la vapeur d'eau saturante afin de cristalliser la zéolithe à partir de la solution adsorbée. La demande internationale WO-A-93/17781 décrit un procédé de formation d'une membrane de zéolithe par exposition à de la vapeur d'eau saturante d'une solution colloïdale aqueuse ou alcoolique déposée sur un support poreux.

Dans une membrane composite, l'adhésion de la zéolithe au support doit être bonne. Par conséquent, le film de zéolithe doit être lié directement au support. Un traitement de la surface du support pour augmenter sa réactivité s'avère parfois nécessaire. La réactivité peut être augmentée, par exemple, par la formation d'oligomères d'acide silicique sur la surface du support à l'aide de réactifs extérieurs. Par conséquent, la liaison de ces oligomères au support est certainement faible et leur répartition n'est pas homogène.

La présente invention concerne une méthode de préparation de membranes de zéolithe supportée par du verre poreux. Le procédé comprend une étape d'hydrolyse partielle de la silice des surfaces interne et externe du support avant l'étape de cristallisation de la zéolithe.

Les membranes obtenues possèdent des qualités certaines, telles qu'elles peuvent être avantageusement utilisées dans des procédés de séparation, en continu. L'hydrolyse partielle de la silice des surfaces interne et externe du support semble conduire à la formation de groupes silanol ou d'un gel de silice, plus réactifs que la silice initiale. On peut penser également que l'extraction du bore du support de verre conduit à une surface sur laquelle le silicium est plus accessible. L'adhésion de la zéolithe au support est d'autant meilleure. De plus, les groupes silanol ou le gel de silice ainsi formés sont liés chimiquement à la surface du support. Par conséquent, la zéolithe cristallisée à partir de ceux-ci est liée directement au support. De ce fait, l'épaisseur de la couche de zéolithe est constante et peut être fine.

La couche de zéolithe est localisée principalement à la surface externe du support. Effectivement, celui-ci est composé de pores de diamètre trop petit pour contenir des cristaux de zéolithe.

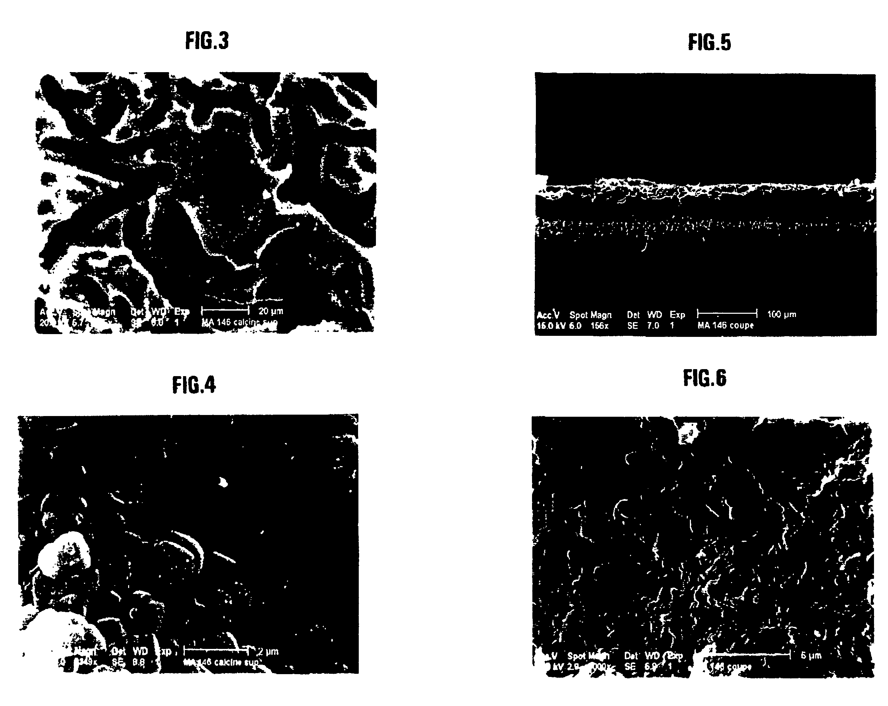

L'invention est décrite de façon plus détaillée ci-après, en liaison avec les figures 1 à 6 parmi lesquelles
- la figure 1 représente schématiquement le dispositif expérimental d'hydrolyse de la surface du support, et
- les figures 2 à 6 sont des microphotographies montrant la surface du verre poreux de départ (figure 2), la surface d'une membrane de zéolithe sous deux grossissements différents (figures 3 et 4) et des coupes de la même membrane de zéolithe sous deux grossissements différents (figures 5 et 6).

La présente invention propose une méthode de préparation d'une membrane composite comprenant une couche continue de zéolithe localisée principalement à la surface d'un support en verre poreux, cette méthode comprenant successivement au moins une étape (a) dans laquelle on réalise une hydrolyse partielle de la silice des surfaces interne et externe dudit support de verre poreux par mise en contact dudit support avec de la vapeur d'eau saturante à une température comprise entre 100 et 500 °C pendant une durée comprise entre 1 h et 8 j , ou par immersion dans de l'eau pure à une température comprise entre 20 et 250°C pendant une durée comprise entre 1 h et 8 j : une étape (b), dans laquelle le support hydrolysé est mis en contact avec une solution, un sol ou un gel contenant des sources d'un ou de plusieurs éléments de charpente et d'autres adjuvants de la cristallisation de la zéolithe: et une étape (c) dans laquelle on réalise la cristallisation de la zéolithe.

Plus particulièrement, le verre poreux utilisé dans l'invention a des pores de diamètre compris entre 1 et 100 nm et sa fraction de volume poreux total est supérieure à 5%.

Dans l'étape (b) le support hydrolysé est séché à une température inférieure à 120 °C avant d'être mis en contact avec la solution, le sol ou le gel contenant des sources d'un ou de plusieurs éléments de charpente et d'autres adjuvants de la cristallisation de la zéolithe
et dans l'étape (c) la zéolithe est cristallisée par chauffage dudit support à une température comprise entre 50 et 300 C pendant une durée comprise entre 1 h et 15 j, de manière à donner une membrane.

Selon l'invention, la méthode de préparation des membranes peut comprendre en outre :
- une étape (d) dans laquelle la membrane formée est refroidie, puis lavée de manière à éliminer au moins partiellement lesdites sources d'un ou de plusieurs éléments de charpente et/ou lesdits adjuvants de la cristallisation de la zéolithe, ladite membrane lavée étant ensuite séchée;
- une étape (e) dans laquelle la membrane ainsi obtenue est calcinée à une température de 300 à 800 °C, ladite membrane calcinée étant ensuite refroidie jusqu'à la température ambiante.

Plus particulièrement, dans le procédé de l'invention, le support est constitué de verre poreux dont les pores ont un diamètre compris entre 1 et 100 nm, préférentiellement entre 2 et 10 nm, et dont la fraction de volume poreux total est supérieure à 5 %, préférentiellement à 25 %. Le support en verre poreux vendu sous la marque Vycor 7930® par la société Corning avec des pores de diamètre moyen égal à 4 nm est un exemple approprié.

Toutes les géométries peuvent convenir pour le support. La géométrie peut être plane : disque, feuille, etc. Elle peut également être tubulaire ou sous forme de spirale.

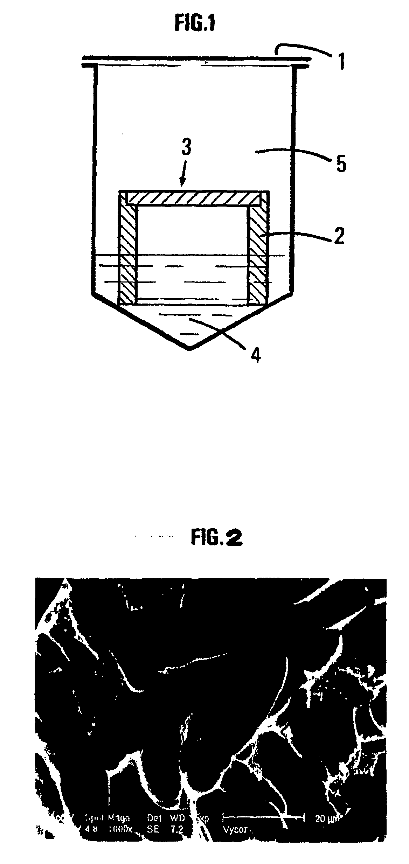

L'hydrolyse partielle de la silice du support est réalisée par mise en contact du support avec de la vapeur d'eau saturante. Le support est placé dans un dispositif approprié à une température comprise entre 100 et 500 °C, de préférence comprise entre 100 et 250 °C, et pendant une durée de préférence comprise entre 1 h et 8 j, de préférence comprise entre 1 et 24 h, pour former un gel de silice sur les surfaces interne et externe. Un exemple de dispositif approprié est représenté sur la figure 1. Il comprend un autoclave chemisé en polytétrafluroroéthylène (1) et une pièce cylindrique (2) également en polytétrafluroroéthylène permettant de maintenir le support (3) dans la phase vapeur (5) en équilibre avec l'eau liquide (4). Des adjuvants volatils peuvent être ajoutés à la vapeur d'eau pour accélérer le processus d'hydrolyse, par exemple des acides ou des bases, tels que l'acide chlorhydrique ou l'ammoniaque. Le dispositif contenant le support est refroidi à la température ambiante ; le support est séché à une température inférieure à 120 °C, pendant une durée comprise entre 1 et 24 h, de préférence à 60 °C pendant 2 h et est refroidi à la température ambiante.

L'hydrolyse peut aussi être réalisée par la mise en contact du support avec de l'eau pure ou une solution aqueuse acide ou basique contenant par exemple de l'acide chlorhydrique ou de l'ammoniaque ou encore une amine telle que la propylamine ou la triéthylamine. Le support est alors immergé dans la solution à une température comprise entre 20 et 250 °C pendant une durée comprise entre 1 h et 8 j. Après un éventuel refroidissement, le support est retiré de la solution aqueuse, séché à une température inférieure à 120 °C, pendant une durée comprise entre 1 et 24 h et est refroidi à la température ambiante.

La cristallisation hydrothermale de la couche de zéolithe peut être effectuée selon deux méthodes.

Dans la première méthode, la zéolithe est cristallisée par chauffage du support hydrolysé immergé dans une solution, un sol ou un gel contenu dans un autoclave chemisé de polytétrafluroroéthylène à une température comprise entre 50 et 300 °C, de préférence entre 100 et 130 °C, et pendant un temps compris entre 1 h et 15 j, de préférence entre 3 h et 3 j. La solution, le sol ou le gel contient les sources d'un ou de plusieurs éléments de charpente de la zéolithe et d'autres adjuvants de la cristallisation de la zéolithe. Les sources des éléments de charpente sont susceptibles de conduire à des tétraèdres TO₄ (où T est au moins un élément choisi parmi Si, Al, B, Ga, Ge et P) et sont préférentiellement des alcoxydes, par exemple pour le silicium du tétraéthoxysilane. Cependant les oxydes et les nitrates conviennent également.

Les adjuvants de la cristallisation de la zéolithe sont constitués d'acides ou de bases et/ou de sels minéraux et/ou organiques et/ou des molécules non dissociées servant essentiellement d'agents mobilisateur et structurant et de contre-ion de la charge de la charpente. Les ions fluorure ou hydroxyde sont les principaux agents mobilisateurs, introduits par exemple sous forme d'hydroxyde de sodium et d'acide fluorhydrique. Divers agents structurants minéraux ou organiques peuvent convenir : des cations hydratés (ions sodium ou potassium), des paires ioniques (ions ammonium ou phosphonium et les anions correspondants) ou des molécules neutres (amines, alcools, ou éthers). Comme adjuvants de cristallisation , on utilise le plus souvent l'hydroxyde ou le bromure de tétrapropylammonium, les hydroxydes de sodium et potassium, l'ammoniaque, l'acide fluorhydrique et comme éthers, les éthers-couronnes.

Dans la deuxième méthode, le support hydrolysé est imprégné de la solution, du sol ou du gel contenant les sources d'un ou de plusieurs éléments de charpente et autres adjuvants de cristallisation comme ci-dessus. L'imprégnation consiste de préférence à immerger le support dans le liquide (solution, sol ou gel), mais d'autres méthodes peuvent être utilisées, par exemple le dépôt du liquide sur la surface du support poreux. L'imprégnation peut être effectuée à une température comprise entre 20 et 200 °C, pendant une durée comprise entre 1 mn et 72 h et sous une pression comprise entre 10⁻⁵ et 1 atm. Par exemple, l'imprégnation peut être effectuée à la température ambiante, pendant 2 h, et sous la pression atmosphérique. Le support est ensuite séparé de la solution, du sol ou du gel, puis mis au contact de vapeur d'eau saturante à une température comprise entre 50 et 300 °C, préférentiellement entre 100 et 130 °C et pendant un temps compris entre 1 h et 15 j, de préférence entre 3 h et 5 j, afin de cristalliser la zéolithe.

La deuxième méthode incluant l'utilisation d'une solution est employée de préférence à la première. La synthèse hydrothermale par exposition à de la vapeur d'eau saturante permet de limiter le volume du milieu réactionnel et par conséquent l'attaque du support dans le cas d'un milieu réactionnel aggressif, par exemple d'un milieu basique. Dans le cas d'une solution précurseur de zéolithe de type MFI, le milieu basique et riche en agent structurant permet la formation de petits cristaux de forme sphérique dont l'assemblage est d'autant plus homogène. D'autre part, la croissance cristalline de la zéolithe a lieu exclusivement au niveau de la surface externe du support. Les pores de celui-ci sont en effet trop petits pour contenir des cristaux de zéolithe. Les réactifs introduits dans le volume poreux du support participent à l'alimentation de la croissance cristalline de la zéolithe.

La membrane ainsi formée suivant l'une ou l'autre des deux méthodes est refroidie à la température ambiante, éventuellement séparée du milieu réactionnel et lavée de manière à éliminer au moins partiellement les sources des éléments de charpente en excès et/ou les adjuvants de la cristallisation de la zéolithe. Ce lavage est préférentiellement effectué avec de l'eau distillée. La membrane est ensuite séchée préférentiellement à 60 °C pendant une durée comprise entre 2 et 24 h et refroidie à la température ambiante.

La cristallisation hydrothermale de la couche de zéolithe suivie du refroidissement, de la séparation éventuelle du milieu réactionnel, du lavage et du séchage de la membrane formée peut être répétée autant de fois que nécessaire.

La membrane est ensuite calcinée par montée progressive à une température comprise entre 300 et 800 °C, préférentiellement entre 400 et 600 °C. Cette montée peut s'effectuer d'une manière continue ou par paliers pendant une durée comprise entre 5 et 50 h. La température de calcination est ensuite maintenue à cette valeur pendant une durée comprise entre 10 mn et 24 h. La membrane est ensuite refroidie progressivement jusqu'à la température ambiante. Le refroidissement peut s'effectuer d'une manière continue ou par paliers pendant une durée comprise entre 1 h et 24 h.

Ce procédé peut être appliqué à toutes les zéolithes, c'est-à-dire tous les solides cristallisés caractérisés par une structure comportant une charpente tridimensionnelle résultant de l'enchaînement de tétraèdres TO₄ (T = Si, Al, B, Ga, Ge et/ou P), chaque atome d'oxygène étant commun à deux tétraèdres, et des canaux et cavités de dimensions moléculaires. Les types structuraux désignés par FAU, GME, MOR, OFF, MFI, MEL, FER, LTA et CHA, selon la nomenclature IUPAC, sont des exemples appropriés.

Ce procédé peut aussi être appliqué à tous les solides résultant de l'enchaînement d'octaèdres TO₆ (T = Ti, Mn, et/ou Mo), par exemple les titanosilicates, et aux solides mésoporeux du type MCM-41.

Les exemples qui suivent sont destinés à illustrer l'invention de façon non limitative.

### Exemple 1

Le support en verre utilisé provient de la société Corning (référence : "Vycor" 7930). Ses caractéristiques sont : composition chimique 96 % SiO₂; 3 % B₂O₃; 0,4 % Al₂O₃; alcalins (traces) et arsenic (traces) ; diamètre moyen des pores : 4 nm.
Il est placé dans un autoclave chemisé de PTFE (Figure 1) contenant 10 g d'eau distillée et est maintenu hors de l'eau grâce à une pièce cylindrique en PTFE. L'autoclave est chauffé à 170 °C pendant 19 h. Dans ces conditions, la vapeur d'eau saturante a pour effet d'augmenter la réactivité chimique de la surface du support. L'autoclave contenant le support est refroidi à la température ambiante. Le support est ensuite séché à 60 °C pendant 2 h, refroidi à la température ambiante dans un dessiccateur garni de silica gel et pesé. Sa masse est de 1,2305 g. Le support est ensuite immergé dans une solution de composition molaire : 1 SiO₂ ; 0,004 Na₂O 0,18 TPA₂O; 19,2 H₂O 4 C₂H₅OH pendant 2 h. Cette solution est préparée par l'addition d'une solution aqueuse d'hydroxyde de sodium et de tétrapropylammonium à du tétraéthoxysilane. Le mélange des deux phases est soumis à une agitation à la température ambiante pendant 20 h pour hydrolyser l'alcoxyde. Le support est retiré de la solution. Dans ces conditions, la masse du support augmente de 0,33 g. Le support contenant la solution est placé dans de la vapeur d'eau saturante à 100 °C pendant 96 h. L'autoclave contenant le support est refroidi à la température ambiante. Le support est lavé avec de l'eau distillée, séché à 60 °C pendant 2 h et refroidi à la température ambiante dans un dessiccateur garni de silica gel. Il est traité une deuxième fois par une solution de même composition que la précédente pendant 2 h. La masse de solution incorporée est alors de 0,31 g. Une deuxième cristallisation de zéolithe est effectuée dans de la vapeur d'eau saturante à 100 °C pendant 120 h. L'autoclave contenant la membrane est refroidi à la température ambiante. La membrane est lavée avec de l'eau distillée, séchée à 60 °C pendant une nuit, refroidie à la température ambiante dans un dessiccateur garni de silica gel, calcinée à 500 °C pendant 6 h puis refroidie à la température ambiante (vitesse de chauffe : 0,5 °C/mn ; vitesse de refroidissement : 1°C/mn). Le diffractogramme de rayons X met en évidence un recouvrement total de la surface de l'une des deux faces par de la zéolithe de type MFI. Des photographies de microscopie électronique à balayage montrent la présence de petits cristaux de forme sphérique. Ils forment une couche compacte liée au support. Cette couche épouse la surface, donc elle est directement liée au support (Figure 2).

Avant l'étape de calcination (canaux de la zéolithe obstrués par TPA⁺), la membrane est étanche au méthane. Ceci montre l'absence d'espaces entre les cristaux de zéolithe.

### Exemple 2 (comparatif)

Le mode opératoire est similaire à celui décrit dans l'exemple 1 mais le support ne subit aucune augmentation de la réactivité chimique avant la cristallisation de la zéolithe. Aucune zéolithe ne cristallise sur la surface externe.

### Exemple 3

Le mode opératoire est similaire à celui décrit dans l'exemple 1 mais l'hydrolyse est réalisée par chauffage hydrothermal du support immergé dans 20 g d'eau distillée à 170 °C pendant 19 h et la couche de zéolithe est cristallisée en une seule étape.

### Exemple 4

Des mesures de perméation gazeuse sont effectuées sur la membrane décrite dans l'exemple 1.

La membrane calcinée à 500 °C pendant 6 h est collée sur un disque métallique perforé à l'aide de résine époxy étanche aux gaz. L'ensemble est placé dans un appareil de perméation gazeuse.

Les résultats de perméabilités aux gaz purs de la membrane et les sélectivités correspondantes sont donnés respectivement dans les tableaux 1 et 2. Les résultats de perméabilités et sélectivités de la membrane sont indiqués pour deux types de mélanges 50/50 (Tableau 3).

**Tableau 1 :**

| *Perméabilités aux gaz purs à 145 °C* | | |
|---|---|---|
| Gaz | Différence de pression (10⁵ Pa) | Perméabilité (10⁻⁸mol/s Pa m²) |
| H₂ | 2,3 | 4,3 |
| He | 2,3 | 2,7 |
| CH₄ | 2,3 | 0,7 |
| CO₂ | 2,3 | 0,4 |
| n-C₄H₁₀ | 1,1 | ∼0 |
| i-C₄H₁₀ | 2,1 | ∼0 |

**Tableau 2 :**

| *Sélectivités à 145 °C obtenues à partir des perméabilités aux gaz purs* | |
|---|---|
| Gaz | Sélectivités |
| H₂/He | 1,6 |
| H₂/CH₄ | 6,1 |
| H₂/CO₂ | 10.8 |

**Tableau 3 :**

| *Perméabilités et sélectivités pour deux mélanges 50* / *50 à 149 °C* | | | | |
|---|---|---|---|---|
| Type de mélange | H₂ et CO₂ | | H₂ et CH₄ | |
| Gaz | H₂ | CO₂ | H₂ | CH₄ |
| Pression en amont (bar) | 1,65 | 1,65 | 1,75 | 1,75 |
| Pression en aval (bar) | 0,69 | 0,31 | 0,84 | 0,16 |
| Perméabilité totale (10-³ mol /s m²) | 4,74 | | 5,18 | |
| Perméabilité spécifique (10⁻⁸ mol / s m² Pa) | 3,4 | 1,1 | 4,78 | 0,52 |
| Coefficient de sélectivité | 3,1 | | 9,2 | |

## Revendications

1. Une méthode de préparation d'une membrane composite comprenant un support en verre poreux et une couche continue de zéolithe localisée principalement à la surface dudit support, **caractérisée en ce qu'**elle comprend successivement :
- une étape (a), dans laquelle on réalise une hydrolyse partielle de la silice des surfaces interne et externe du support en verre poreux par mise en contact dudit support avec de la vapeur d'eau saturante à une température comprise entre 100 et 500 °C pendant une durée comprise entre 1 h et 8 j, ou par immersion dans de l'eau pure à une température comprise entre 20 et 250 °C pendant une durée comprise entre 1 h et 8 j ;
- une étape (b), dans laquelle le support hydrolysé est mis en contact avec une solution, un sol ou un gel contenant des sources d'un ou de plusieurs éléments de charpente et d'autres adjuvants de la cristallisation de la zéolithe ; et
- une étape (c), dans laquelle on réalise la cristallisation de la zéolithe.

2. Une méthode selon la revendication 1 **caractérisée en ce que** :
- dans l'étape (a), le support en verre poreux utilisé a des pores de diamètre compris entre 1 et 100 nm et dont la fraction de volume poreux total est supérieure à 5% ;
- dans l'étape (b), le support hydrolysé est séché à une température inférieure à 120 °C avant d'être mis en contact avec ladite solution, ledit sol ou ledit gel ; et
- dans l'étape (c), la zéolithe est cristallisée par chauffage dudit support à une température comprise entre 50 et 300 C pendant une durée comprise entre 1 h et 15 j, de manière à donner une membrane.

3. Une méthode selon l'une des revendications 1 et 2 **caractérisée en ce qu'**elle comprend en outre successivement :
- une étape (d) dans laquelle la membrane formée est refroidie, puis lavée de manière à éliminer au moins partiellement lesdites sources d'un ou de plusieurs éléments de charpente et/ou lesdits adjuvants de la cristallisation de la zéolithe, ladite membrane lavée étant ensuite séchée ; et
- une étape (e) dans laquelle la membrane ainsi obtenue est calcinée à une température de 300 et 800 °C, ladite membrane calcinée étant ensuite refroidie jusqu'à la température ambiante.

4. Une méthode selon l'une des revendications 2 et 3 dans laquelle le support en verre utilisé dans l'étape (a) a des pores de diamètre compris entre 2 et 10 nm et sa fraction de volume poreux total est supérieure à 25 %.

5. Une méthode selon l'une des revendications 1 à 4 dans laquelle ladite vapeur d'eau saturante utilisée dans l'étape(a) est additionnée d'adjuvants acides ou basiques préférentiellement choisis parmi l'acide chlorhydrique et l'ammoniaque.

6. Une méthode selon l'une des revendications 1 à 4 dans laquelle ladite eau pure utilisée dans l'étape(a) est additionnée d'adjuvants acides ou basiques préférentiellement choisis parmi l'acide bchlorhydrique, l'ammoniaque et les aminés telles que la propylamine ou la triéthylamine.

7. Une méthode selon l'une des revendications 1 à 5, dans laquelle, dans l'étape (c) la zéolithe est cristallisée par chauffage dudit support immergé dans ladite solution ou ledit sol ou ledit gel pendant une durée comprise entre 3 h et 3 j.

8. Une méthode selon l'un des revendications 1 à 5, dans laquelle, dans l'étape (c), ledit support est séparé de ladite solution ou dudit sol ou dudit gel, puis mis au contact de vapeur d'eau saturante pendant une durée comprise entre 3 h et 5 j, afin de cristalliser la zéolithe.

9. Une méthode selon l'une des revendications 1 à 6, **caractérisé en ce que**, dans l'étape (c), la température est de 100 à 130°C

10. Une méthode selon l'une des revendications 3 à 9, dans laquelle, dans l'étape (d) le lavage est effectué à l'eau distillée.

11. Une méthode selon les revendications 3 à 10, dans laquelle on réitère au moins une fois les opérations des étapes (b), (c) et (d), sur ladite membrane formée après l'étape (d).

12. Une méthode selon les revendications 3 à 11, dans laquelle l'étape (e) la membrane est calcinée par montée progressive à une température de calcination comprise entre 400 et 600 °C, pendant une durée comprise entre 5 et 50 h, ladite membrane étant maintenue à ladite température de calcination pendant une durée comprise entre 10 min et 24 h, ladite membrane calcinée étant ensuite refroidie progressivement jusqu'à la température ambiante pendant une durée comprise entre 1 et 24 h.

## Patentansprüche

1. Verfahren zur Herstellung einer Verbundmembran, die einen Träger aus porösem Glas und eine kontinuierliche Zeolithlage, die hauptsächlich auf der Oberfläche des Trägers lokalisiert ist, umfasst, **dadurch gekennzeichnet, dass** es aufeinanderfolgend umfasst:
- eine Stufe (a), in der man eine teilweise Hydrolyse des Siliziumoxids der innern und äußeren Oberflächen des Trägers aus porösem Glas durch Kontaktieren dieses Trägers mit sättigendem Wasserdampf bei einer Temperatur zwischen 100 und 500°C für eine Dauer zwischen 1h und 8 Tagen oder durch Befeuchten in reinem Wasser bei einer Temperatur zwischen 20 und 250°C für eine Dauer zwischen 1h und 8 Tagen durchführt;
- eine Stufe (b), in der der hydrolysierte Träger mit einer Lösung, einer kolloidalen Lösung oder einem Gel kontaktiert wird, das die Quellen von einem oder mehreren Gitterelementen und andere Zeolithkristallisationszusatzstoffe enthält; und
- eine Stufe (c), in der man die Kristallisation des Zeolithen durchführt.

2. Verfahren nach Anspruch 1, **dadurch gekennzeichnet, dass**:
- in Stufe (a) der verwendete Träger aus porösem Glas Poren mit einem Durchmesser zwischen 1 und 100 nm hat und wovon der Anteil an Gesamtporenvolumen größer als 5% ist,
- in Stufe (b) der hydrolysierte Träger bei einer Temperatur unter 120°C getrocknet wird, bevor er mit der Lösung, der kolloidalen Lösung oder dem Gel kontaktiert wird; und
- in Stufe (c) der Zeolith durch Erwärmen des Trägers bei einer Temperatur zwischen 50 und 300°C für eine Dauer zwischen 1h und 15 Tagen derart kristallisiert wird, dass er eine Membran ergibt.

3. Verfahren nach einem der Ansprüche 1 und 2, dadurch gekennzeichn et, dass es außerdem aufeinanderfolgend umfasst:
- eine Stufe (d), in der die gebildete Membran abgekühlt und dann derart gewaschen wird, dass wenigstens teilweise die Quellen von einem oder mehreren Gitterelementen und/oder die Zeolithkristallisationszusatzstoffe entfernt werden, wobei die gewaschene Membran anschließend getrocknet wird; und
- eine Stufe (e), in der die so erhaltene Membran bei einer Temperatur von 300 und 800°C kalziniert wird, wobei die kalzinierte Membrananschließend bis auf Umgebungstemperatur abgekühlt wird.

4. Verfahren nach einem der Ansprüche 2 und 3, bei dem der in Stufe (a) verwendete Glasträger Poren mit einem Durchmesser zwischen 2 und 10 nm hat und sein Anteil an Gesamtporenvolumen größer als 25% ist.

5. Verfahren nach einem der Ansprüche 1 bis 4, bei dem der in Stufe (a) verwendete gesättigende Wasserdampf mit Säure- oder Basezusätzen versetzt wird, die vorzugsweise unter Salzsäure und Ammoniak gewählt sind.

6. Verfahren nach einem der Ansprüche 1 bis 4, bei dem das in Stufe (a) verwendete reine Wasser mit Säure- oder Basezusätzen versetzt wird, die vorzugsweise unter Salzsäure, Ammoniak und Aminen wie Propylamin oder Triethylamin gewählt sind.

7. Verfahren nach einem der Ansprüche 1 bis 5, bei dem in Stufe (c) der Zeolith durch Heizen des in der Lösung oder der kolloidalen Lösung oder dem Gel befeuchteten Trägers für eine Dauer zwischen 3h und 3 Tagen kristallisiert wird.

8. Verfahren nach einem der Ansprüche 1 bis 5, bei dem in Stufe (c) der Träger von der Lösung oder der kolloidalen Lösung oder dem Gel getrennt wird und dann mit sättigendem Wasserdampf für eine Dauer zwischen 3h und 5 Tagen kontaktiert wird, um den Zeolithen zu kristallisieren.

9. Verfahren nach einem der Ansprüche 1 bis 6, dadurch gekennzeichn e t, dass in Stufe (c) die Temperatur 100 bis 130°C ist.

10. Verfahren nach einem der Ansprüche 3 bis 9, **dadurch gekennzeichnet, dass** in Stufe (d) das Waschen mit destilliertem Wasser durchgeführt wird.

11. Verfahren nach den Ansprüchen 3 bis 10, bei dem man wenigstens einmal die Vorgänge der Stufen (b), (c) und (d) auf der nach Stufe (d) gebildeten Membran wiederholt.

12. Verfahren nach den Ansprüchen 3 bis 11, bei dem in Stufe (e) die Membran durch fortschreitenden Anstieg bei einer Kalzinierungstemperatur zwischen 400 und 600°C für eine Dauer zwischen 5 und 50h kalziniert wird, wobei die Membran bei der Kalzinierungstemperatur für eine Dauer zwischen 10 min und 24 h gehalten wird, wobei die kalzinierte Membran anschließend fortschreitend bis auf Umgebungstemperatur für eine Dauer zwischen 1 und 24h abgekühlt wird.

## Claims

1. A process for the production of a composite membrane comprising a porous glass support and a continuous zeolite layer which is principally located on the surface of said support, **characterized in that** it comprises, in succession,
- a step (a), step (a), in which partial hydrolysis of the silica of the internal and external surfaces of said porous glass support is carried out, by contacting said support with saturating steam at a temperature comprised between 100° and 500°C for a time comprised between 1 hour and 8 days, or by immersion in pure water at a temperature comprised between 20° and 250°C for a time comprised between 1 hour and 8 days;
- a step (b), in which the hydrolysed support is contacted with a solution, a sol or a gel containing sources of one or more framework elements and other additives for zeolite crystallisation; and
- a step (c) wherein the crystallisation of the zeolite is effected.

2. , A process according to claim 1, **characterized in that**:
- in step (a), the porous glass support has pores with a diameter which is in the range 1 nm to 100 nm and in which the total pore volume fraction is more than 5%;
- in step (b) the hydrolysed support is dried at a temperature which is below 120°C before being brought into contact with said solution, said sol or said gel.;and
- in step (c) in which the zeolite is crystallised by heating said support to a temperature which is in the range 50°C to 300°C for a period which is in the range 1 hour to 15 days, to produce a membrane.

3. A process according to any one of claims 1 and 2, **characterized in that**. it further comprises, in succession:
- a step (d) in which the membrane which is formed is cooled and washed to eliminate, at least partially, said sources of one or more framework elements and/or said zeolite crystallisation additives said washed membrane then being dried; and
- a step (e) in which the membrane obtained is calcined at a temperature of 300°C to 800°C, said calcined membrane then being cooled to ambient temperature.

4. A process according to any one of claims 2 and 3, in which the glass support has pores with a diameter which is in the range 2 nm to 10 nm and has a total pore volume fraction of more than 25%.

5. A process according to any one of claims 1 to 4, in which said saturated steam is supplemented with acidic or basic additives which are preferably selected from hydrochloric acid and ammonia.

6. A process according to any one of claims 1 to 4, in which said pure water is supplemented with acidic or basic additives which are preferably selected from hydrochloric acid, ammonia and amines such as propylamine or triethylamine.

7. A process according to any one of claims 1 to 5 in which, in step (c), the zeolite is crystallised by heating said support immersed in said solution, said sol or said gel for a period which is in the range 3 hours to 3 days.

8. A process according to any one of claims 1 to 5 in which, in step (e), said support is separated from said solution, said sol or said gel, then brought into contact with saturated steam for a period which is in the range 3 hours to 5 days, before crystallising the zeolite.

9. A process according to any one of claims 1 to 6, **characterized in that** in step (c), the temperature is 100°C to 130°C.

10. A process according to any one of claims 3 to 9 in which, in step (d), washing is effected using distilled water.

11. A process according to any one of claims 3 to 10, in which the operations of steps (b) (c) and (d) are repeated at least once using said membrane formed after step (d).

12. A process according to any one of claims 3 to 11 in which, in step (e), the membrane is calcined by a gradual increase of temperature to a calcining temperature which is in the range 400°C to 600°C for a period which is in the range 5 hours to 50 hours, said membrane being maintained at said calcining temperature for a period which is in the range 10 minutes to 24 hours, said calcined membrane then being gradually cooled to ambient temperature over a period which is in the range 1 hour to 24 hours.
